# EUROPEAN PATENT SPECIFICATION

(11) **EP 0 927 566 B1**
(45) Date of publication and mention of the grant of the patent: **07.05.2003**
(21) Application number: 98925650.8
(22) Date of filing: 24.06.1998
(51) Int. Cl.: A63F 9/24, G09B 9/058

(54) **SYSTEM AND PROCESS FOR INTERACTIVE SIMULATION AND FOR DISSUADING YOUNG PEOPLE FROM TAKING DRUGS**
SYSTEM UND VERFAHREN ZUR INTERAKTIVEN SIMULATION UND ZUM ABBRINGEN JUGENDLICHER VOM DROGENKONSUM
SYSTEME ET PROCEDE DE SIMULATION INTERACTIVE ET PERMETTANT DE DISSUADER LES JEUNES DE CONSOMMER DES DROGUES

(30) Priority: 24.06.1997 US 50654 P
(43) Date of publication of application: 07.07.1999
(73) Proprietor: Legarda Ibanez, Juan, 28007 Madrid (ES)
(72) Inventor: Legarda Ibanez, Juan, 28007 Madrid (ES)
(74) Representative: Carpintero Lopez, Francisco
(86) International application number: ES9800181
(87) International publication number: WO98058717

(56) References cited:
- WO-A1-85/01667
- WO-A1-97/37738
- US-A- 5 035 625
- US-A- 5 678 571
- US-A- 5 730 654
- US-A- 5 749 580

## Description

This invention generally relates to the field of cognitive modification, and more particularly to the utilization of technological means for simulating the deleterious effects of drug usage and thereby discouraging the use of drugs by youngsters.

### BACKGROUNG OF THE INVENTION

Use of addictive drugs by young people is a tremendous and tragic problem worldwide. Current approaches to this problem include international, military and police efforts to control the production and interdict the flow of addictive drugs, as well as a diverse array of programs involving education and role models that are designed to deter youngsters from using drugs.

The present invention focuses on the "user side" of the problem. However, rather than using conventional passive media such as stories, books, or videos, the present invention seeks to employ more active delivery methods in order to increase the power and effectiveness of the anti-drug message.

It is well established that interactive video, arcade, handheld and multimedia computer games capture the attention of young people as do few other toys. It occurred to me that it might be possible to use these particular interactive media, combined with the information I have gathered professionally regarding the patterns of drug use and addiction, to create for youngsters a strong and lasting predisposition against ever getting involved with drugs.

Drug taking is characterized by an initial "high", followed by a depressed state as the drug wears off. Repeated ingestion results in "tolerance", that is, less of a high for a given dose, a shorter high, and ever deepening states of depression that follow. Considerable anxiety and preoccupation surround the expensive process of securing another dose. Increasing the dosage can temporarily counteract the development of tolerance, but the subsequent bouts of depression will typically deepen. Further, in increasing the dosage (or dealing with drugs of unknown strength) is very easy to self-administer an overdose, which can readily kill. With some drugs, there are strong withdrawal effects when an established habit cannot be sustained. Obviously, drugs constitute a "disaster area" for our youth, and major ongoing threat to society.

US-A-5 035 625 discloses a method of teaching a student via a computer game combined with a teaching system. The game, such as e.g. a football game, is interrupted at pause points and the student is asked questions such as e.g. math questions. If the student answers correctly the probability for higher scores in the game playing session afterwards is increased, e.g. the joystick is sampled more often than regular and thus the mobility increases, and, conversely, the probability for higher scores later on is decreased if the given answers were wrong.

### SUMMARY OF THE INVENTION

It is an object of the present invention to harness the most powerful interactive media available in order to deliver a compelling and lasting anti-drug message to young people.

Further objects of the invention include the following:
- to provide a simulated experience of actually making a decision whether or not to take a dose of drugs, and then to demonstrate the effects of that decision.
- to provide a system that may be used at any time of the day or week and is not limited to certain physical or psychological sessions.
- to provide a versatile system that can be used alone; can be used to provide "booster" sessions for renewed impact or to reinforce other treatments; can be used to deter use by pleople who have never used drugs; or can be used to treat people who have been addicted.
- to provide specific implementations of the invention in a variety of embodiments, so as to have the option of obtaining reinforcement either by readministering the original embodiment, or by administering different embodiments, over a period of time.
- to provide different and alternative implementations that target different drugs.
- to encourage situations wherein a subject who has used the invention and its simulated option to take drugs, will suggest to another subject not to use the simulated drug option.

The objects of the invention are achieved through multimedia electronic games that may be adapted to run in a variety of forms on any of a number of state-of-the-art gaming platforms. In such a game, a simulated ingestion of drugs provides an initial enhanced sensation of movement and sound, and apparent enhanced player performance. After a determined time, the effect wears off, the player has to attend to the preoccupations of taking another dose. The scenario is repeated, but with each repetition tolerance to the drug grows, the "highs" are shorter lived, and growing percentage of the player's time must be devoted to obtaining and taking the drugs. After a series of repetitions it becomes clear that rather than enhancing the player's ability to play the game, the drug taking has become a serious limitation that completely frustrates any concerted effort to play the game competitively.

As shown in the description that follows, and in the accompanying drawings, the invention has been implemented in the form of a motorcycle racing game on a "multimedia PC" platform. However, as further explained in such description, the principles of the invention could equally well be implemented in any of a variety of electronic games that pit the user's skill against the computer, or indeed against other users, and on any of a variety of gaming platforms.

### BRIEF DESCRIPTION OF THE DRAWINGS

Figure 1 is a flow chart showing the overall operation of the invention.
Figure 2 depicts a typical multimedia computer gaming system, shown playing the conventional version of the present game.
Figure 3 is a screen shot showing the opening option to play a conventional gaem, or to play the game with cocaine.
Figures 4-8 are screen shots showing game play with the conventional motorcycle racing game.
Figures 9-13 are screen shots showing game play with the motorcycle racing game modified in accordance with the present invention.
Figure 14 is a flow chart showing the operation of the substitute and additional routines incorporated into the modified motorcycle racing game in order to implement the present invention.

### DETAILED DESCRIPTION OF THE PREFERRED EMBODIMENT

### Typical Operation of the Invention

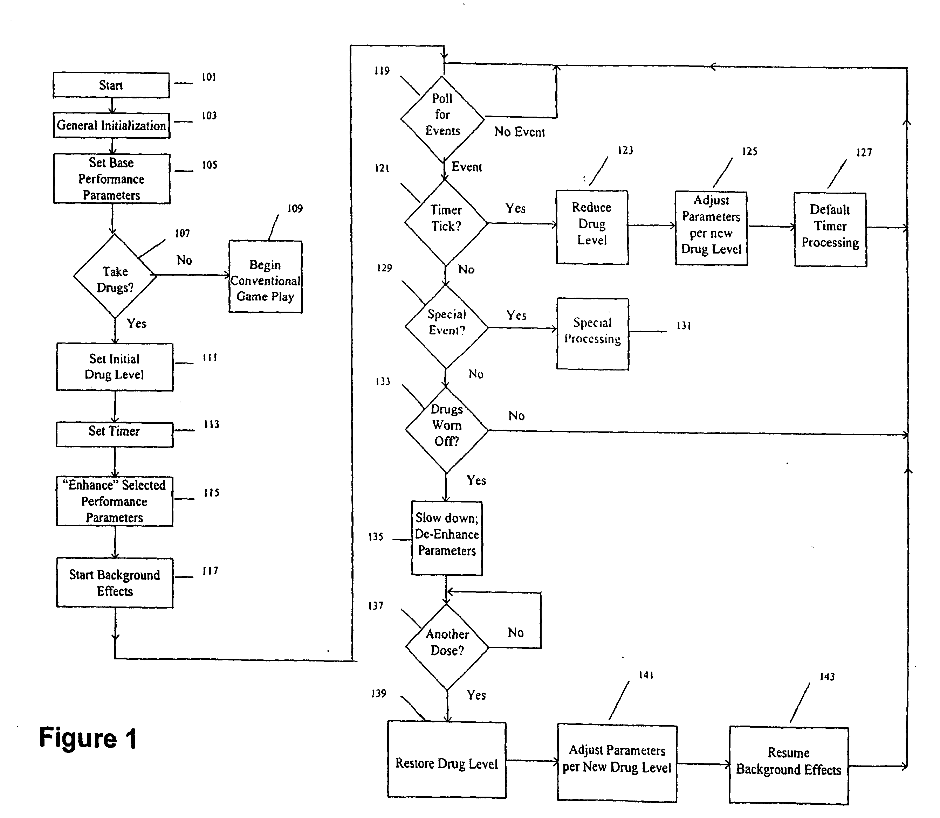

Figure 1 is a flow chart showing the typical mode of operation of the invention in the context of an interactive electronic game. It is important to recognize that the principles of the invention, as illustrated in Figure 1, could be implemented in an unlimited number of completely different interactive game programs, and furthermore, that such principles are not specific to any particular additive drug. Indeed, the flowchart in Figure 1 itself represents a specific embodiment in which certain design decisions not dictated by the principles of the invention have been made, as a matter of arbitrary choice or for ease of illustration. Figure 1, therefore, should not be understood as defining the limits of the invention.

In **Figure 1**, the program begins in a "Start" state, **101**. General initialization **103** as appropriate for the type of game involved then follows. Either following step **103** (as shown here for clarity) or as part of step **103**, certain performance parameters for the game are set to default or base levels, **105**.

The user is then presented with a choice **107** to take or not to take a simulated dose of drugs. If the user chooses not to take the drugs, conventional game play **109** follows.

If the user opts to take the drugs, a further series of initialization steps (**111** to **117**) follows. An initial drug level is set, **111**. A timer is started, **113**. The selected performance parameters are "enhanced" - that is, increased or decreased in order to give the user apparently superior performance characteristics, or to give inferior characteristics to game opponents and/or antagonists. Background effects (music, etc.) are started, **117** (a normal initialization step which has been delayed).

The game then enters an event loop, shown here as an event polling step **115**.

On each "timer tick" **121** the drug level is examined and possibly reduced by a certain amount **123**, and the performance parameters are optionally adjusted **125** in accordance with the new drug level. Default timer processing **127** handles the normal processing that must occur on every timer tick in a game of the type involved. (Other normal processing, such as processing of user input control events, is assumed but not shown).

The game may define "special events", such as collisions, fight sequences, etc., which are to be handled, for example, more benignly than normal, in order to augment the perception of enhanced performance. Such special events are detected **129** and processed as desired **131**.

Finally, when the drug level has been sufficiently reduced by repetitions of step **123**, a "drugs worn off" condition arises, which is detected in step **133.** If step **133** detects that the drugs have worn off, a cycle of steps **135-143** are performed before game play is continued.

First, the player slows down and/or stops (shown here as a sudden stop) **135**; performance parameters, if still enhanced, are disenhanced, and background events are suspended.

The user is then presented with a decision whether or not to take another dose of drugs **137**. In this example, the only way for the user to proceed with the game is to take another dose. A "Yes" response results in a full or partial restoration of the drug level **139**, corresponding adjustment of parameters **141**, resumption of background effects **143**, and resumption of play in the event loop **115**.

The foregoing illustrates the characteristics of a typical game that incorporates the principles of the invention. Variations and extensions of the modes of operation shown will be obvious, with respect to game implementation, to those skilled in the art of electronic game implementation, and with respect to game design, to those versed in the pharmacology of addictive drugs.

### Operation of a Working Version of the Invention - A Modified Motorcycle Racing Game

As previously stated, the invention as illustrated in **Figure 1** can be implemented in an unlimited number of interactive games, with the mode of the interaction being based on a variety of addictive substances. The example chosen by the inventor for purposes of demonstration is based on a motorcycle racing game, and is targeted at the drug cocaine.

This example has been implemented to the point of an operable working prototype. It is a modification of an existing popular multimedia motorcycle racing game, "Cyclemania", by Compro Software Systems Ltd. of Israel. Copies of the unmodified game are available through ordinary entertainment software distribution channels. The modification provides an option at the start of the game to play in either conventional mode, without drugs, or to play in a different mode, with cocaine.

Cyclemania is a circa 1994 game, and the demonstration was created on a limited budget. While it illustrates the principles of the invention, and is the preferred embodiment at this time, obviously much more could be done on the more powerful platforms and software environments that exist as of the date of this patent application. Such platform include poserful dedicated arcade machines, virtual reality consoles with head mounted displays, the Nintendo 64, Sony Playstation and Sega Saturn videogame systems, personal computers based on Intel or other CPU chips, as well as networked computers running distributed interactive game applications. The preferred embodiment runs on modest PC equipment. A minimal setup requires a 486-66 or faster processor, 8 MB or more of RAM, a SoundBlaster or other recognized sound card and a 2X or better CD ROM drive. The details of the preferred embodiment in no way limit the invention or the attached claims.

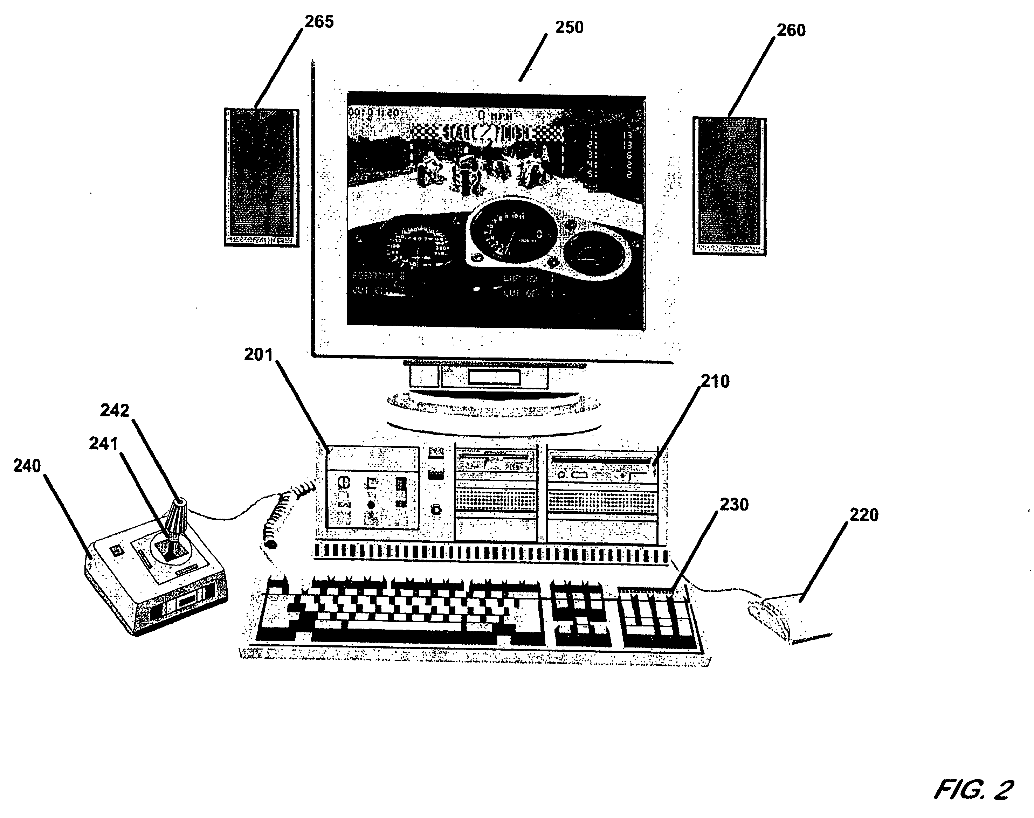

**Figure 2** illustrates a typical computer setup for playing multimedia games of the "arcade/action" variety. It comprises a CPU **201,** video monitor **250,** high speed (2X or better) CD drive **210,** joystick **240**, keyboard **230,** stereo sepakers **260, 265,** and optionally a mouse **220.** The video monitor **250** is shown in **Figure 2** displaying a typical scene from a conventional (non-drug) playing session with the Cyclemania game.

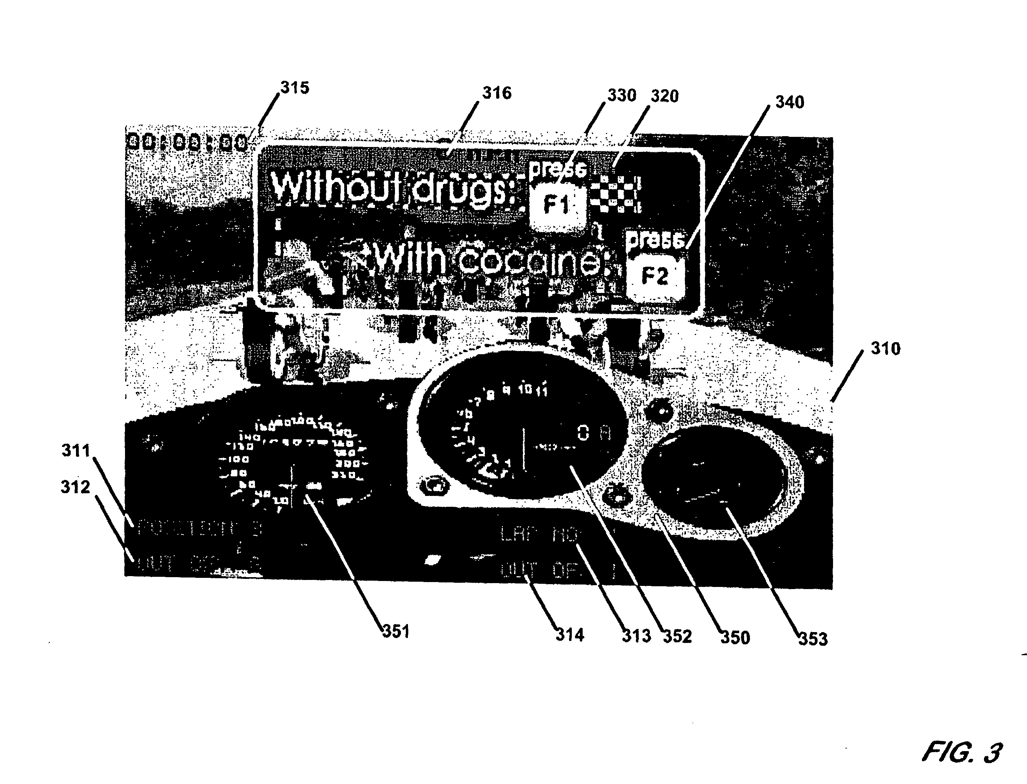

**Figure 3** is a "screen shot" (a printout of a captured full-screen image from video monitor **250**) of the first screen of the modified Cyclemania game that appears after the opening credits and initialization. The background display **310** is the same as in the unmodified game. Overlayed on this display is a dialog box **320** that automatically appears which presents the keyboard selectable choice **330**, **340** to play a conventional game "without drugs", or to play "with cocaine", using keyboard function keys "F1" or "F2". The figures also show the motorcycle instrument panel **350** (with analog, metric speedometer **351**, tachometer and gearshift indicator **352** and gas gauge **353**), overlayed position and lap indicators **311**-**314** and timer **315**, showing elapsed time in the game. Partially obscured by the dialog box in this figure is a digital "miles per hour" speed display **316** at top center (in addition to the analog, metric speedometer **351**). The player's start position is fixed as the third of six riders.

### A Walkthrough of a Conventional Play Session

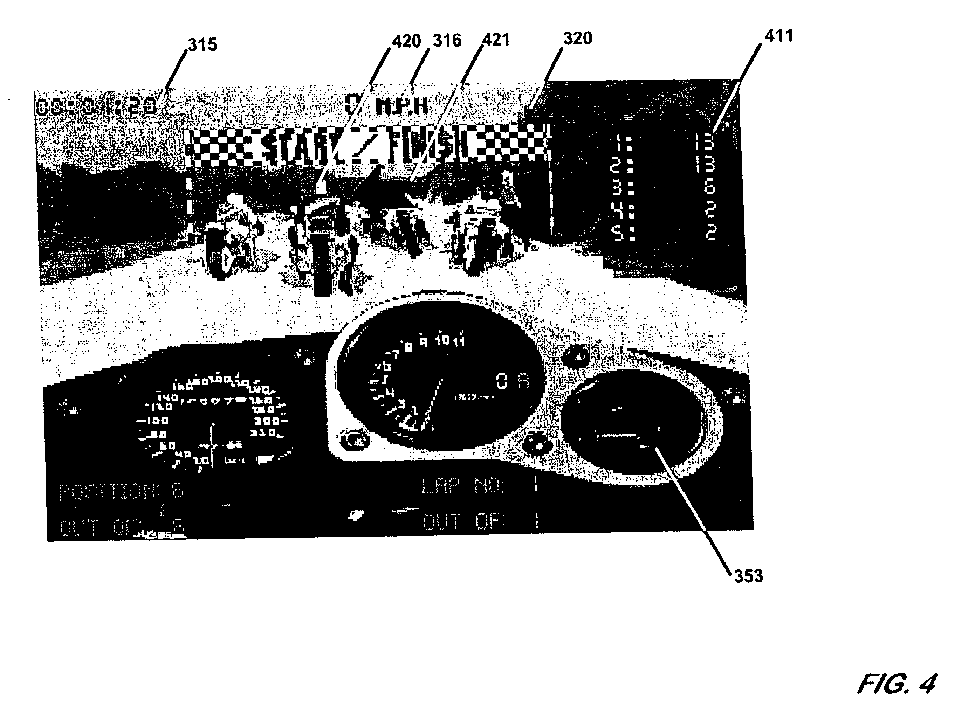

**Figure 4** shows the start of a conventional game. As is typical in games of this genre, the program designers have gone to great lengths to provide for realism in vehicle physics and game play. This particular game is notable for the realism of the scenery and the accompanying 3D terrain generation, providing (without drugs) a breathtaking simulated ride through actual roads in Israel.

The user must acquire considerable skill to turn in a competitive performance in the conventional game. **Figura 4** shows that at the start of the game an additional status panel **411** becomes visible showing where the player **420** (initially pointed out by arrow **421**) stands in relation to the five other riders in the race. One second into the game, as shown in timer **315**, the player has already fallen to last place, just trying to get the bike moving.

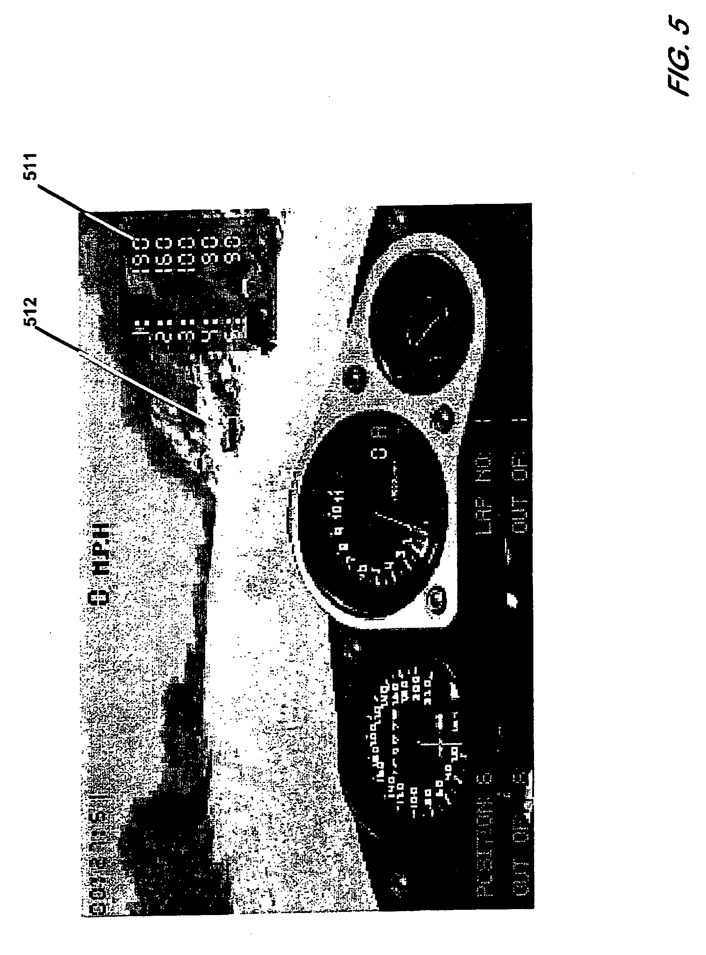

The bike quickly accelerates to speeds, upwards of 150 m.p.h. However, turns must be carefully executed at this speed, or the bike will wipe out with disastrous consequences. **Figure 5** shows the immediate aftermath of such a wipeout (biker **511** and bike **512** flat on the ground).

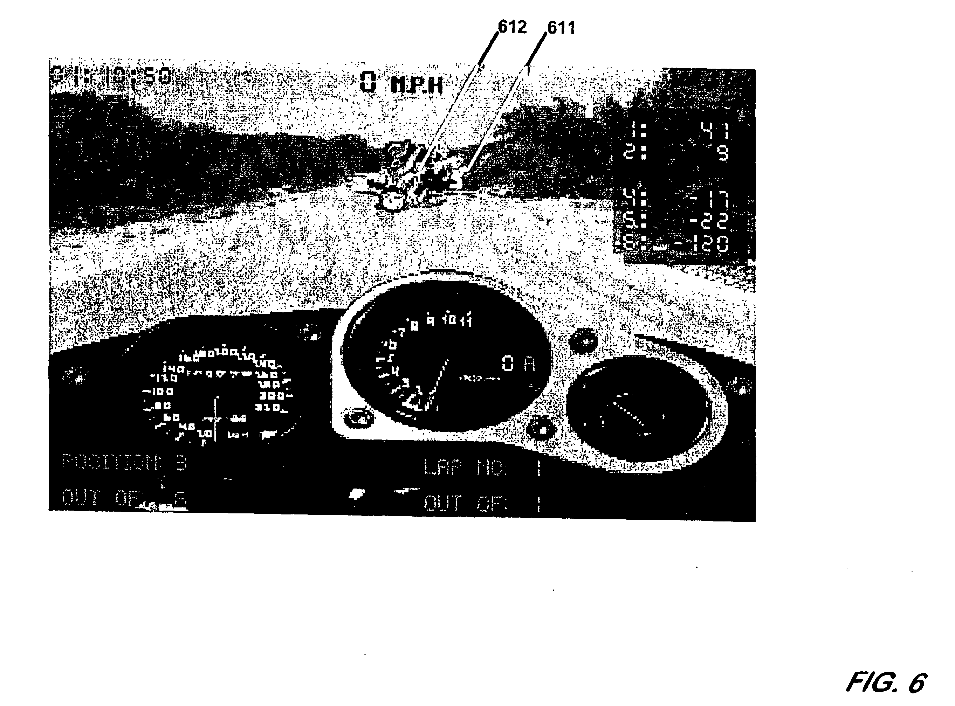

It is possible in the conventional game to start catching up on the group. **Figure 6** shows the player **611** having advanced to third place, attempting to overtake the second place bike 612. However, a slight collision between two bikes flattens our player again, which in the virtual world only results in sending him or her to last place.

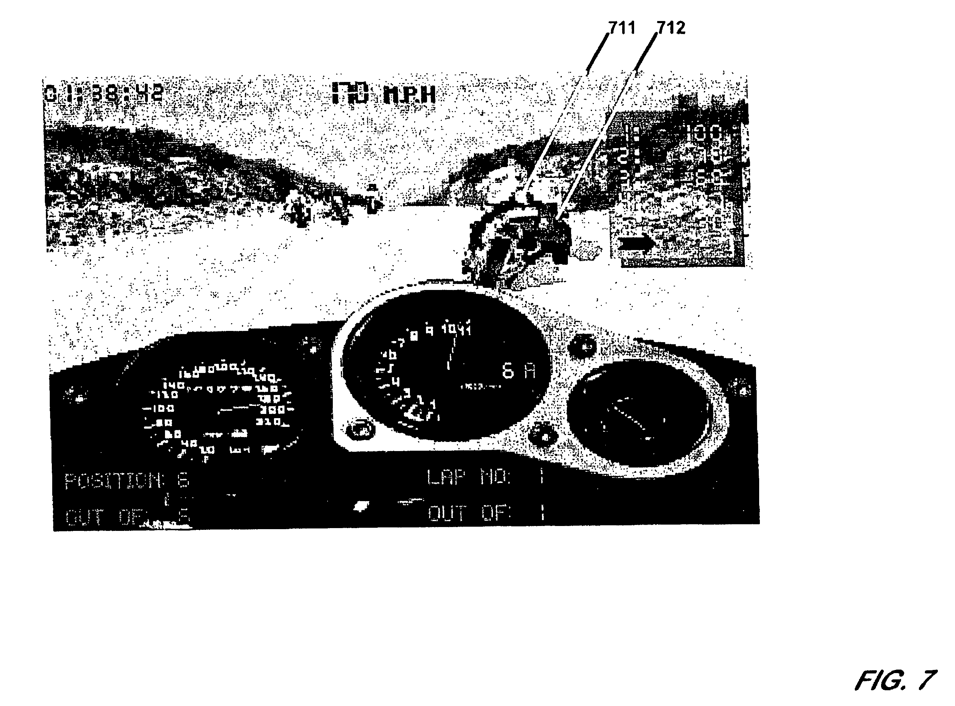

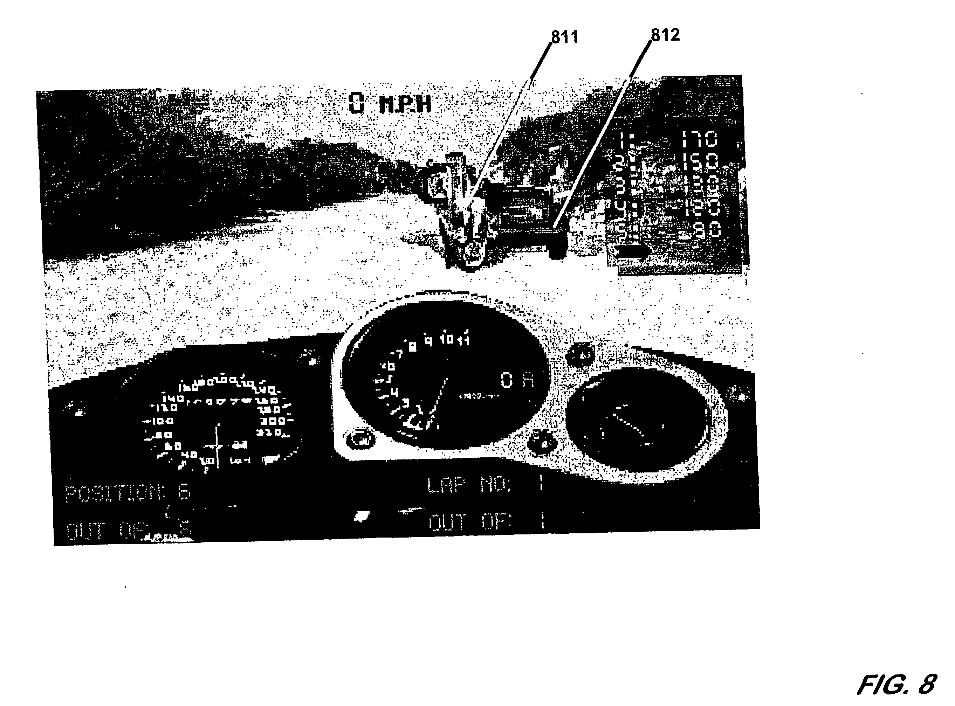

Trying once again to catch the others, the player, **711** in **Figure 7,** comes up on a "slow moving" Porsche® **712.** Not surprisingly, as shown in **Figure 8,** not going around the slower vehicle, results in a crash 811, again sending the player back to last place. Despite such potential setbacks, with effort and learning, the conventional game can be mastered and won.

### Description of Game Play "With Cocaine"

The present invention is illustrated when the user, presented with the innocent looking choice in **Figure 3**, selects, via the keyboard, the simulated option **340** to take cocaine. The player's computer character then says "Whoa, what a rush!" and the modified game begins.

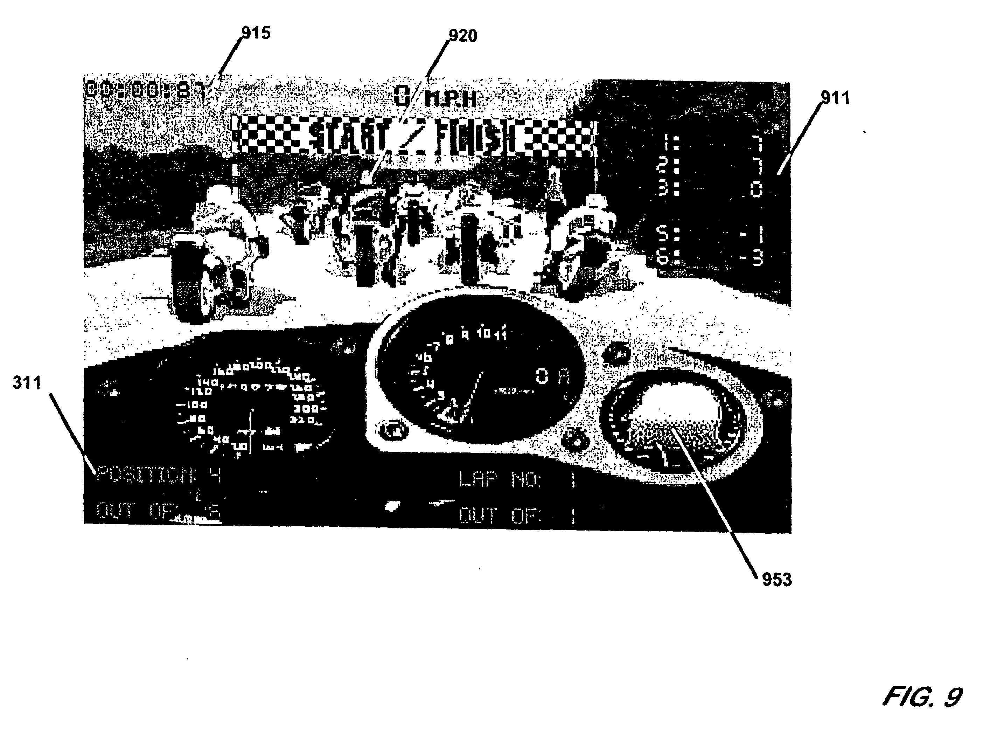

**Figure 9** shows the start of the modified game. This scene is similar to **Figure 4** of the conventional game, except that gauge **353** in **Figure 4** has been replaced in Figure 9 by a head-shaped bar-graph **953**. This bar graph serves as a form of "drug-o-meter" showing how much drugs remain in the player's "head". The bar is rendered in color, with red at the bottom and changing to amber in the middle, and yellow at the top. When the "cocaine" option is selected at the beginning of the modified game, and whenever the user "refills" with the drug during the course of play, the bar graph moves from empty to full in an animated sequence over approximately two seconds, giving the visual effect of filling one's head with a "snort" of cocaine. A hissing sound effect is provided for accompaniment.

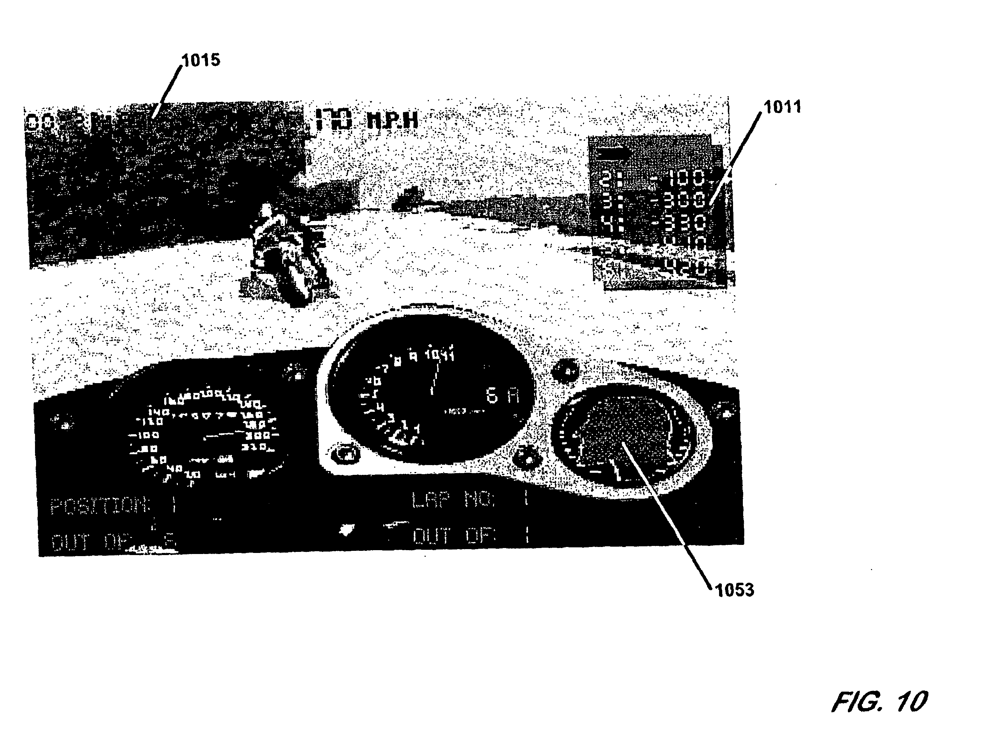

After this brief interlude, the game begins. The clock begins to roll, but - unlike the conventional game - the other bikes will not start moving until the player's bike is underway. The user here gets off to a reasonable start in fourth place (tied for third according to panel **911**). Once all the bikes blast away, the player weaves through all of them almost immediately and surges into first place, winding the bike up to about 170 m.p.h. (**Figure 10**).

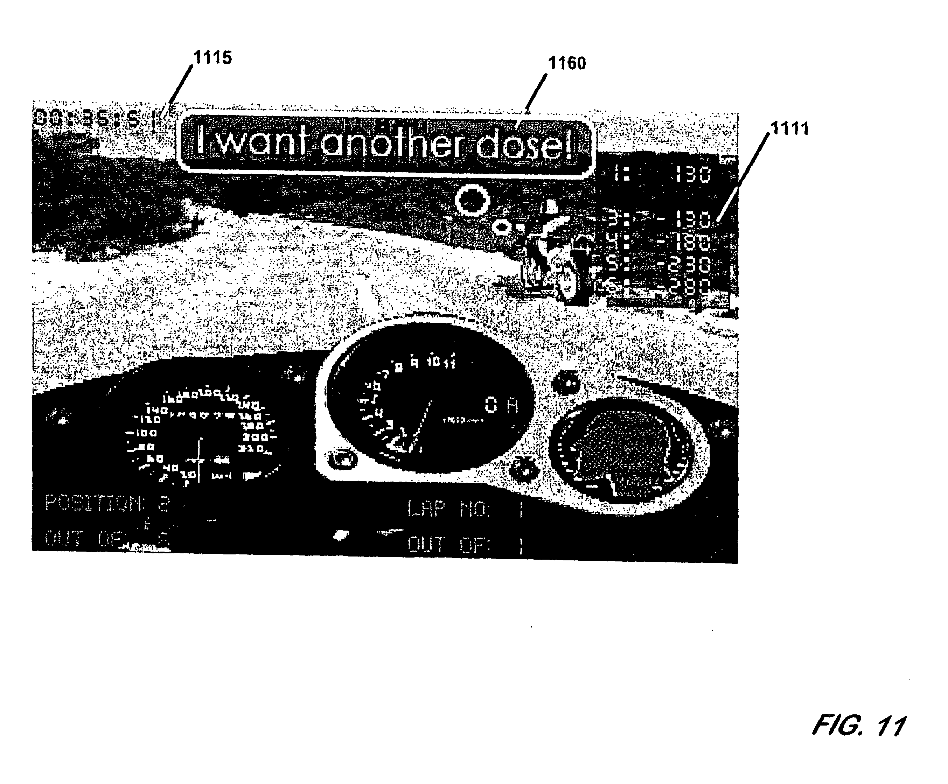

The bike will not fall over in turns, leaps over overtaken and oncoming traffic and obstacles (including opponent's bikes, pedestrians, horses, etc.), and is essentially unstoppable. However, as shown in the "head" indicator **1053**, the drug inevitably wears off. Clock **1015** in **Figure 10** shows the situation 23 seconds into the game. The player surges along in first place for about another five seconds, and then completely runs out of drugs at about 30 seconds. This is evidently unbearable, for the player slams on the brakes, decelerates from 170 to 0 m.p.h. in a handful of seconds, and at about 35 seconds on clock **1115** comes to a full stop at the side of the road as shown in **Figure 11**. There is only one thing on his or her mind: a dialog **1160** appears in the form of a "though bubble", saying "I want another dose!". As shown in panel **1111,** the closest rider behind has already blasted by.

Getting antoher dose is not really an "option" in this embodiment. It is a necessity. The player can't answer "no" to this question. The only way out (short of flipping the power switch) is to hit the escape key, thereby bringing up the option to quit, resume, or start a new game. There is no way to continue the modified game, once started, without continuing to take drugs.

Hitting the Return (Enter) key gets the player the needed dose. By the time the player finishes snorting up, all of the other bikes have zoomed by. The player, with some effort, can get back into a reasonable position. But it starts to get harder with each iteration, as the duration of the "high" from the dose of cocaine gradually tails off over repeated doses from the initial duration of 30 seconds on the game clock down to the 10 to 12 second range.

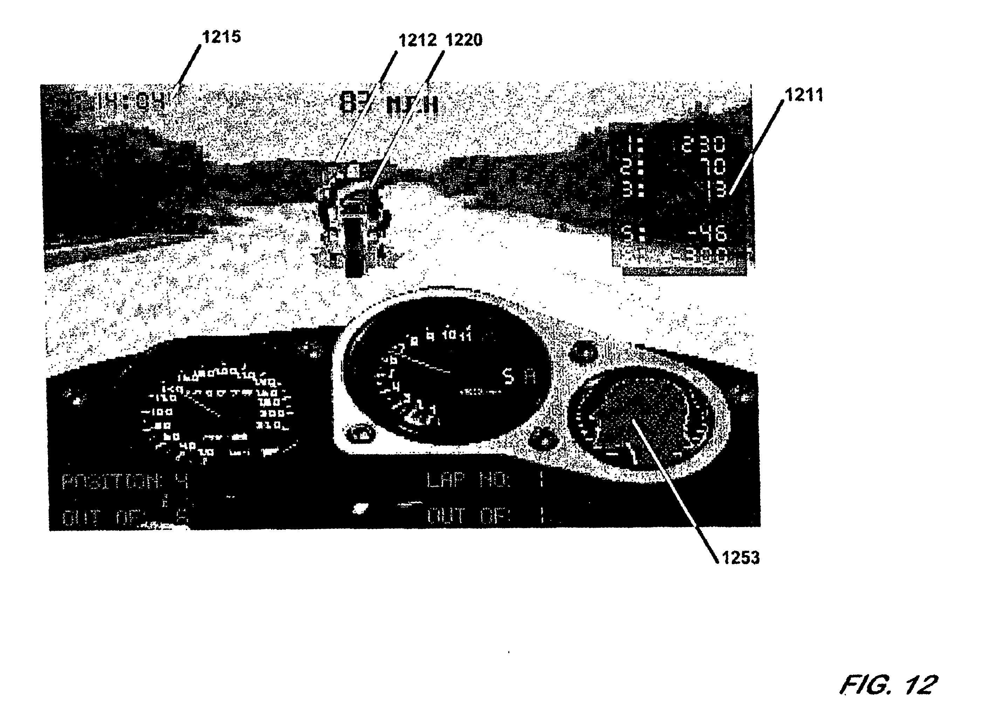

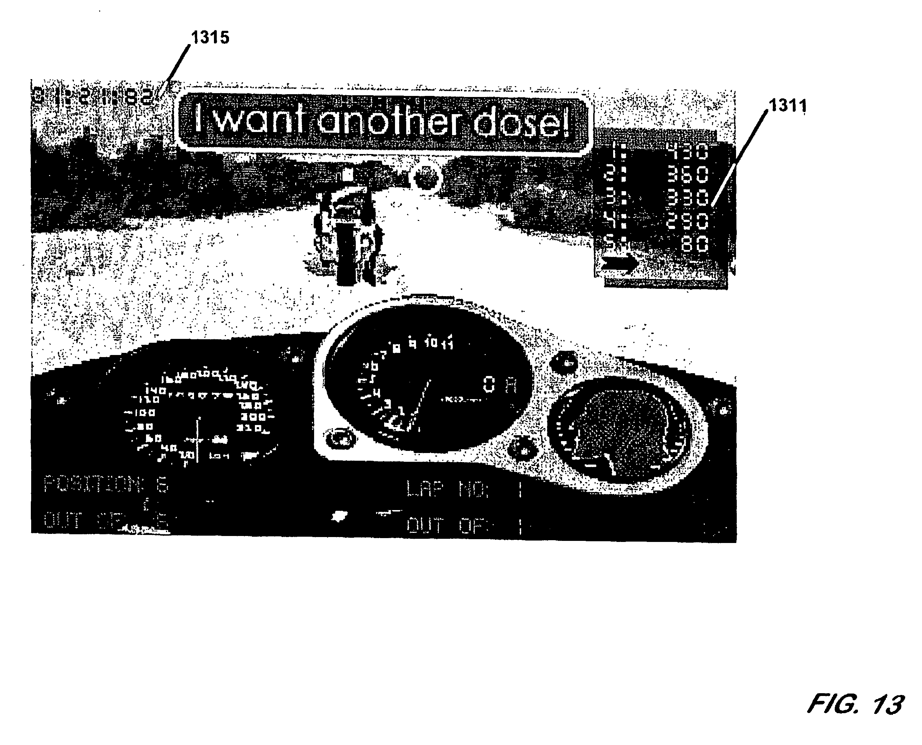

**Figure 12** shows a situation 1:14 minutes into a game, after one "refill". The player **1220** is closing in on the third-place rider **1212**. However, the indicator **1253** shows that the player has just run out of drugs. Instead of overtaking rider **1212**, player **1220** hits the brakes and comes to a screeching halt as shown in **Figure 13**, demanding "another dose". A mere seven seconds after **Figure 12**, as shown by clock **1315**, the player is back in last place. By the time he/she refills, the player will be well back in last place, facing ever diminishing effects from the given dose of drugs.

The result is that, despite the seeming enhancement in his/her performance, the player falls steadily behind, and it becomes completely impossible, because of the recurring, debilitating obsession with having to get another dose, ever to catch up with the other racers.

### How Does it Work?

Programming the modifications shown here involved overlaying some simple graphics (the "head" bar graph) on the screens of the existing game, continually outputting the "head" status from within the game's "event loop", manipulating a number of control variables, and providing a few substitute high-level program routines.

In Cyclemania, as in the typical action/arcade game, a large number of internal program variables are "exposed" at or near the surface of the user interface. This is to enable programming with relatively high level scripts, as well as to control game play attributes for purposes of testing, debugging and review. A typical situation in which similar variables are altered, albeit for entirely different reasons, are to provide "cheat codes" and "God modes" in these types of games (sometimes put in to help the testers and then left in (but not publicized) for "fun" and future development).

Cyclemania has a full complement of these exposed internal variables. In combination with some very simple source code modifications (the control sequences for the opening screen and "I Want Another Dose" dialogs), these variables can be easily utilized to accomplish the unique requirements of the invention.

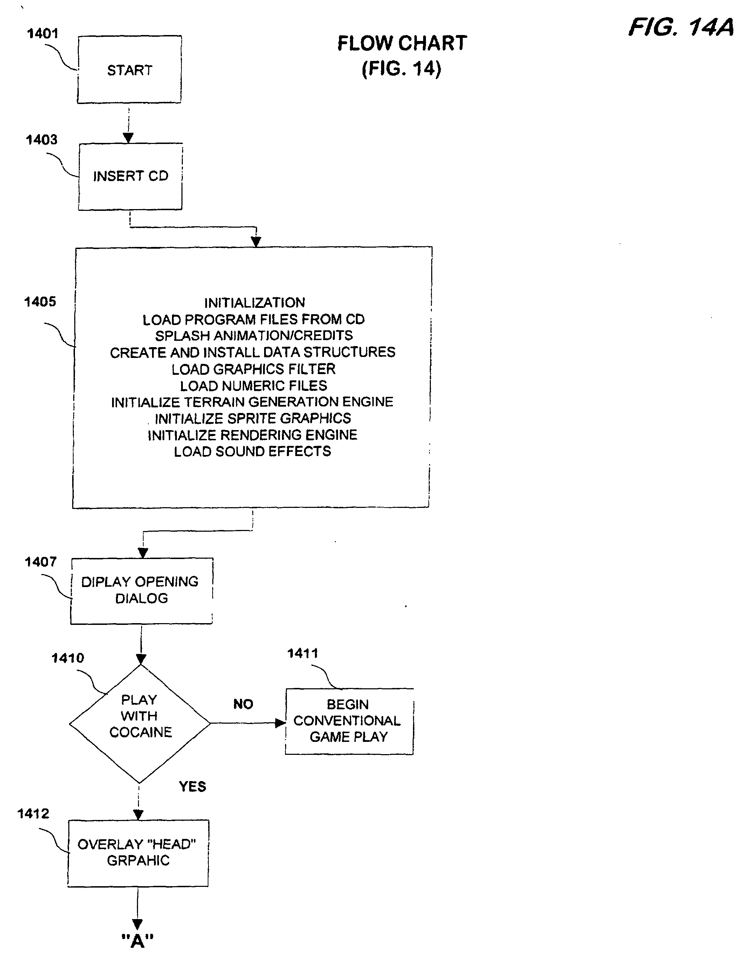

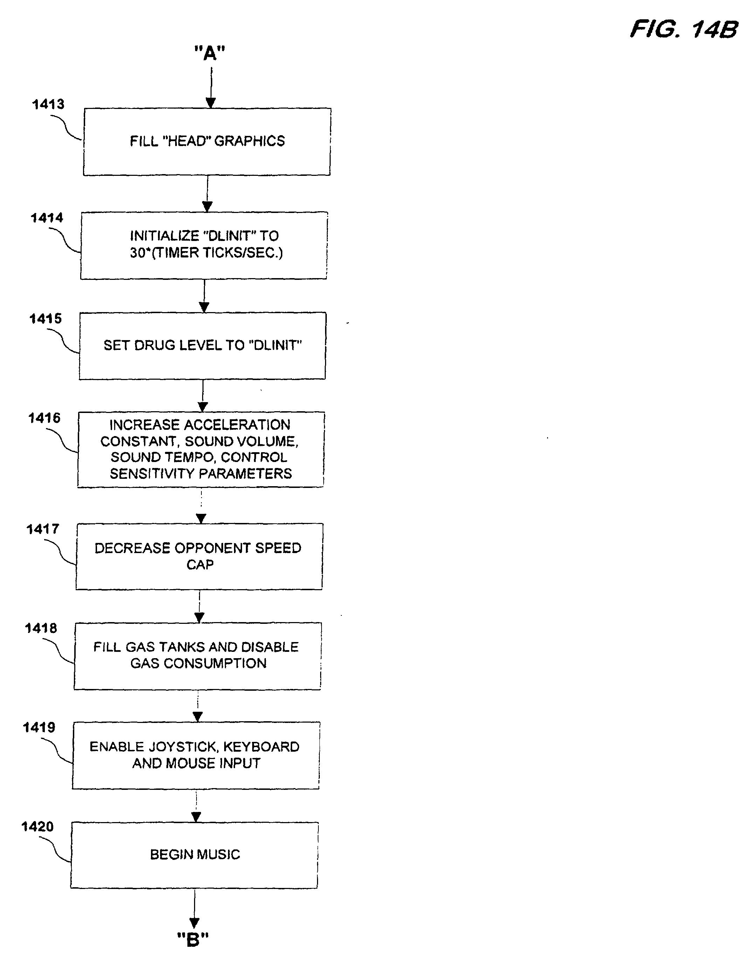

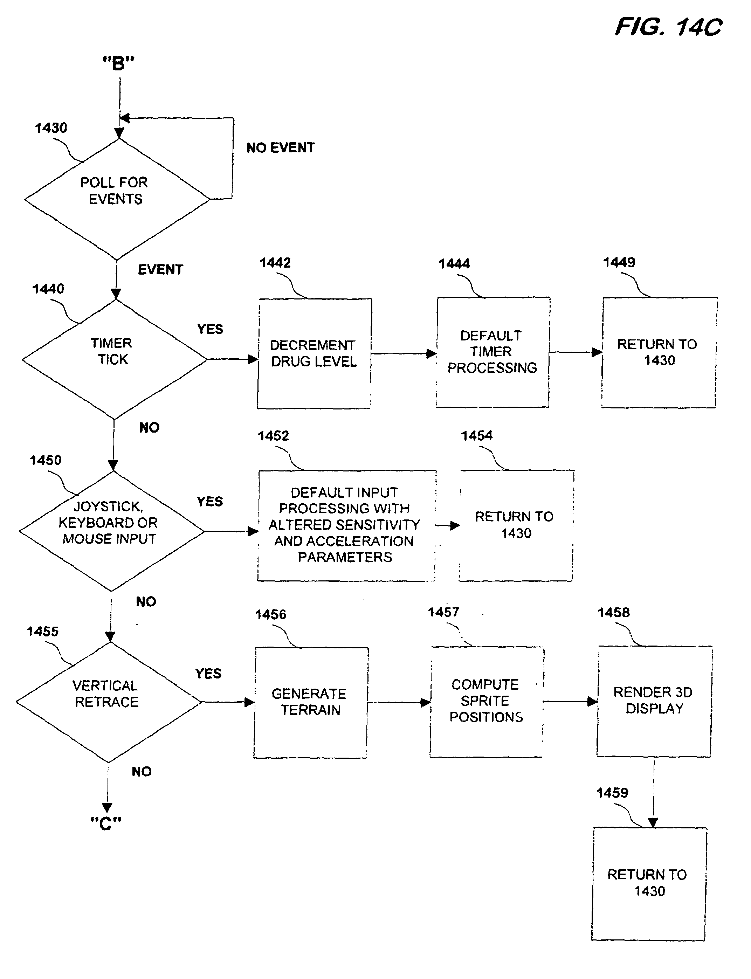

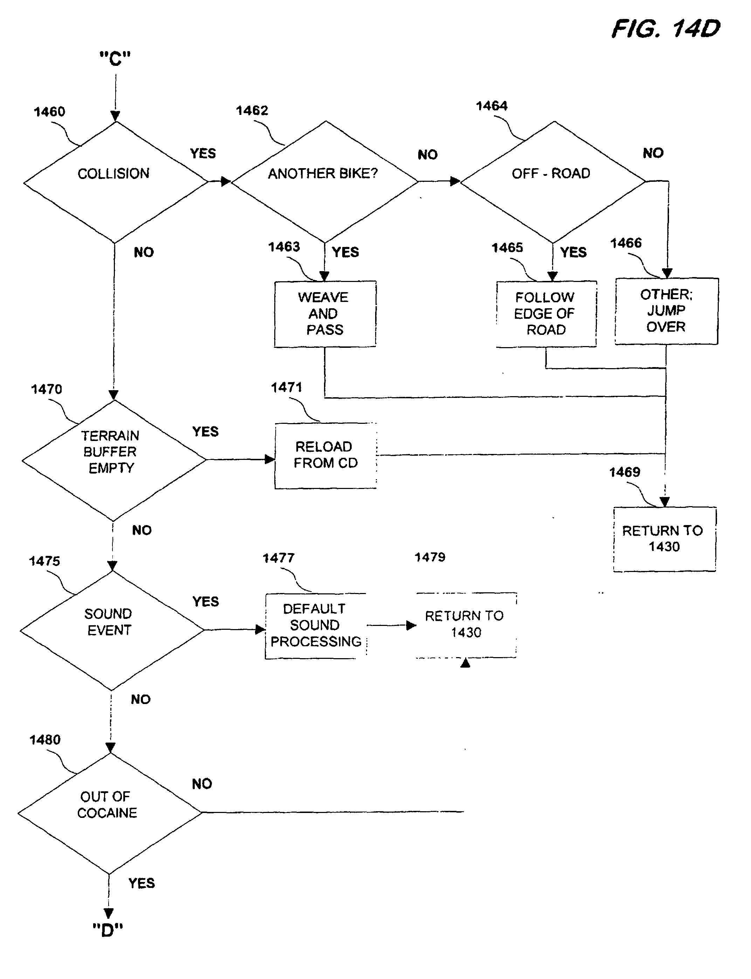

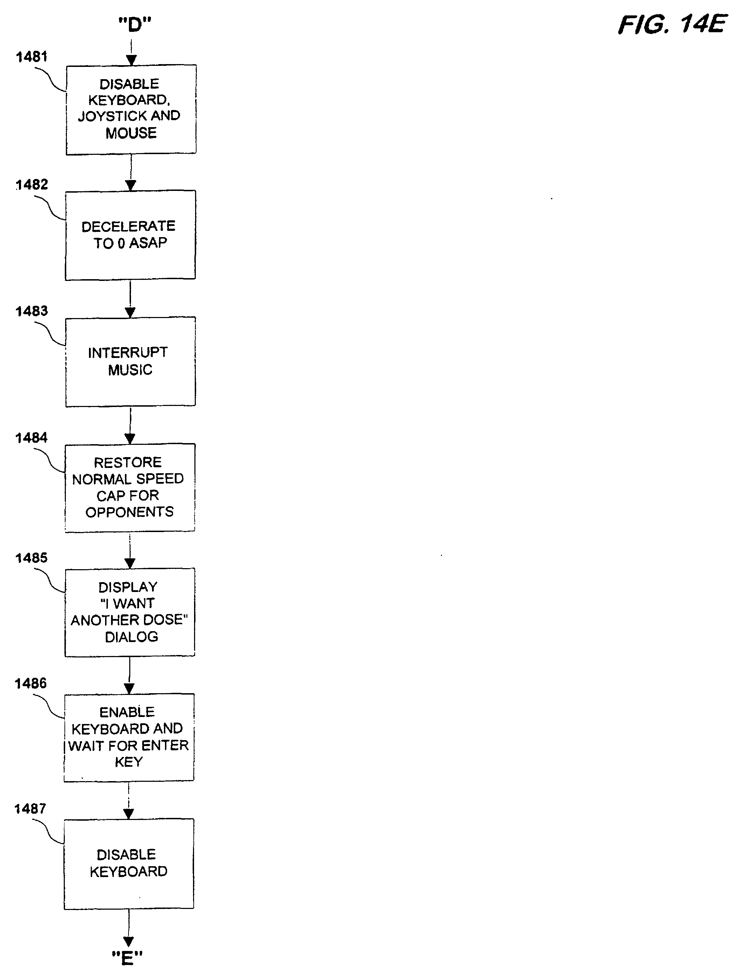

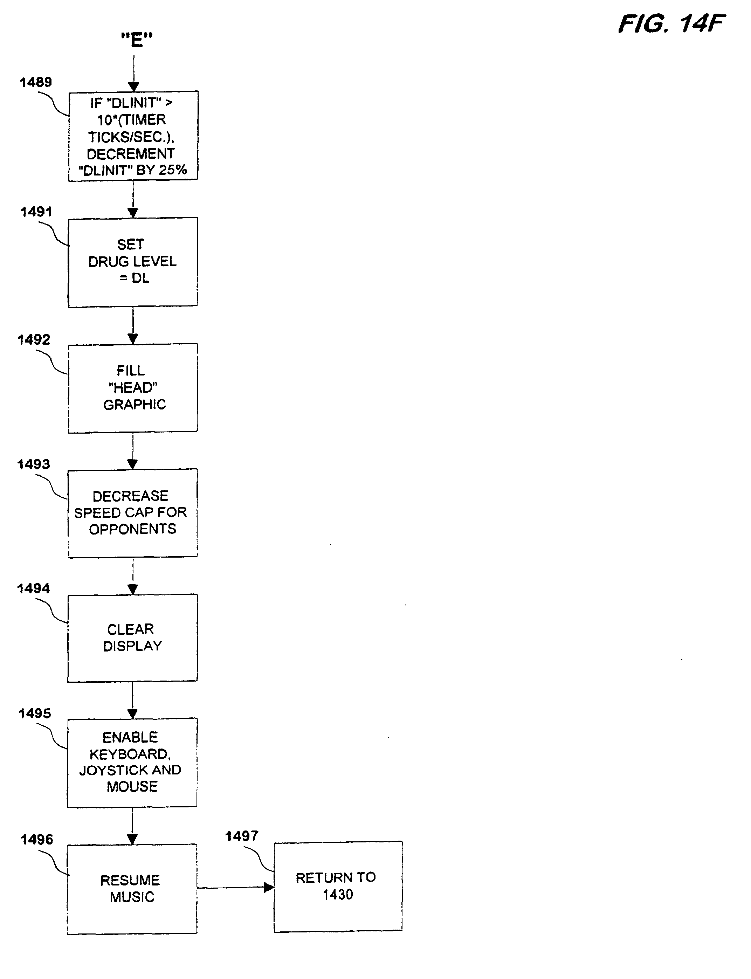

**Figure 14** is a flow chart showing the operation of the substitute and additional routines incorporated in the modified Cyclemania game in order to implement the invention. Briefly, in conventional Cyclemania there is a base range of performance parameters including parameters such as player speed, opponent speed, aggressiveness, responsiveness to user inputs, sound volume and tempo, and the like. At the very beginning of the game, an extension **1407**-**1419** to the program's initialization routine **1405** sets up the opening drugs/no drugs dialog, and operates the animated "head" graphic and sets the timer for the first time. When the user elects at the beginning of game play to take cocaine **1410**, the modified program simulates a drug induced state by enhancing those parameters above their base range, reducing the speed of opponents, setting the gas level to "full" and disabling the decrementation of the varialbe indicating gas consumption **1412-1419**. In addition, three substitute routines are provided (at **1460**) to execute in lieu of the ordinary collision routine. First, where the collision is with another rider, the substitute routine **1462**, instead of causing a fall, causes the player's bike to scoot around the other bike (without any user steering input, and even if the evasive motion implies impossible G-forces). If the collision is with any other type of on-road object, then, no matter how big or high this object is, or how fast it is moving, or what direction it is moving in, a second substitute routine **1464** is invoked to cause the player's bike to jump over it (thereby defying gravity). (Thus, the rider on cocaine can cruise at 170 m.p.h. down the wrong side of the road straight into the radiator of an oncoming semi-trailer truck and the program will lift the bike over the truck, allowing our player to continue on his or her way at undiminished speed). Where the collision is with the side of the road (or the scenery), a third substitute routine **1466** simply tracks the bike along the edge of the road at its current speed, without regard for user input or G-forces.

The main action in the game is called from the event loop **1430**, which begins upon the completio of initialization. The event loop is a continuous loop which polls for defined events and processes them until there occurs an event that forces termination of the loop. The events to be processed include a number that are processed in a conventional game, and in some cases these events are processed in the same manner as in the conventional game. Conventionally handled elements include default timer processing **1444** (based on "ticks" form the system clock); default input processing **1452** (although with altered sensitivity and acceleration parameters); graphics generation **1456, 1457** and rendering **1458** during "vertical retrace" of the video display **1455;** reloading terrain data from the CD **1470, 1471;** and sound events **1475**, **1477**.

However, in the version of the game with drugs, "timer tick" processing **1440**, in addition to the normal default processing **1444**, also affects the drug level. After a dose of cocaine has been given, the dose will reduce to zero over some determined (but diminishing) amount of time, as a result of decrementing at step **1442** in response to a timer tick event **1440**. The running out of this timer triggers an "out of cocaine" event **1480**. The occurrence of this event does not affect the opposing riders (except that they resume their normal speed) or stop the clock, but causes routines to be executed to do the following:
1. Decelerate the player's bike to a stop; set opponents back to normal speed **1481**-**1484**.
2. Raise the "I want another dose" dialog and wait for as long as required for an affirmative press of the "Enter" key or an "Escape" **1485**-**1487**.
3. Fill the animated "head" bar graph graphic **1489-1492.**
4. Reset opponents to reduced speed **1493**.
5. Continue (letting the player restar his/her bike) **1494**-**1497**.

Each time the player takes a dose of drugs, the initial value (DLINIT) of the decrement counter that specifies the number of system clock ticks until the current dose runs out, is reduced by 25% until the duration of the cocaine high has been shortened to its minimun of 10 seconds **1489-1491.**

The routine that reduces the "head" bar display while the player is riding is a substitute for the normal routine that operates the gas gauge. The original gas routine is not used in the modified version, and in any event, in the modified version, the gas gauge display has been overlayed by the "head graphic". The substitute routine works the same way as the normal gas gauge report, except the "head" indicator is a pure function of time determined completely by the initial setting of a decrement variable and timer ticks **1440** in the program's event loop **1430.**

### Options for Further Refinement and Development

There are numerous options for potential variation or embellishment over the present embodiment. For example, the ability to increase or calibrate the dosage could be provided, providing a temporary boost, further deepened depression, and the possibility of sudden death through an overdose. Randomness could be incoporated, affecting parameters such as the strength of a batch of drugs (also with the possibility of overdose). A multiplayer game could be provided, where players "on drugs" could compete against others (and/or additional computer-controlled players) playing conventionally.

Other games besides motorcycle racing games will be utilized, as the objects of the invention are best achieved if a variety of games are available. Other implementations could include any genre of interactive game that pits the skill or dexterity of the user against the computer and/or other players, Examples include other forms of racing games, other "action" games such as "shooter" games, fighting games, and sports games, among others, as well as simulations, adventure and role playing games.

Any of such games could be implemented on any of the arcade, virtual reality, videogame or computers systems discussed herein or on any future game playing platforms.

In addition, other drugs could be modeled. In the context of the present motorcycle racing game, possible examples include the following:
*Opiates (heroin):* "With heroin (F2) or without drugs (F1)". If F2 is selected a sound of aspiration is played indicating that the racer is snorting or "chasing the dragon". The displayed yead that indicates drug level in the body gets full. All the players start racing except the stoned one who says "Whoa, what a rush" (or something of the kind), bends his head and does not move. When the level of the head has decreased a fourth, then he is ready to run in the same conditions of the cocaine option of the test trial: jumping over other cars, not falling, etc. This cycle is repeated as in the cocaine option. If F1 is selected a normal race takes place.
*Alcohol:* "With alcohol (F2) or without drugs (F1)". If F2 is selected, the screen gets blurred and the rest takes place in the same manner as with the cocaine option. The only difference is that with alcohol, crashes take place as in the normal option and he takes a bit longer to recover from them.

In summary, after an initial representation of the differential "behavioral and/or subjective" effects of drugs (i.e., cocaine = excitement, heroin = drowsiness, alcohol =blurred vision), the well being and sense of power that these drugs offer are similar ("what a rush", speed, etc.). These and other different effects of each drug could also be represented depending on the type of game or action, the potential "personality" of the player, the dosage of the drug taken or a combination of these variables. For instance, in a game with two possible levels of cocaine intake, the larger dose would "paralyze the player" and with the lower dose the player would behave as we see in the present game. More complex physiological sounds or effects can be added, so that the player will have a deeper knowledge of the internal effects of the drug. For instance, heart rate could also be displayed. In the case of cocaine, heart rate would be higher at the beginning of the drug intake and slowly decrease in parallel with the decrease of drug level head marker, giving a more realistic effect to the experience of playing "stoned".

While discussed above in the context of the example motorcycle racing game, using similar techniques, those skilled in the art could readily simulate the effects of different drugs in the differente modes or versions of any game constructed in accordance with the principles of this invention.

It is apparent from the foregoing that a new system and method have been developed which demonstrate the great power of interactive game media to deliver a compelling anti-drug message to youngsters. It is my hope that this invention will be successfully used to keep kids from ever using drugs. While the presently existing implementation has been described in greatest detail, it will be apparent to those skilled in the art that up-to-the-minute interactive games and media could be substituted, and the order of play and interaction varied, without departing from the scope of the invention, as defined in the following claims.

## Claims

1. A system for interactively simulating and discouraging drug taking behavior, comprising:
means for executing an interactive game program:
said program further comprising,
a base range of performance parameters for the game, including parameters such as speed, aggressiveness, responsiveness to user inputs, sound volume and tempo;
means responsive to the user's input, for causing the system to simulate ingestion of a dose of drugs and a resulting drug-induced state by enhancing one or more of said performance parameters above said base range;
timing means for determining, in accordance with a timing value, when to terminate said drug-induced state simulation;
means responsive to said timing means for simulating the wearing off of said drug induced state by reducing one or more of said performance parameters to or below said base range; and
means further responsive to said timing means for re-presenting to said user said simulated choice to take a further dose of drugs, and continuing said program in a manner responsive to said choice, whereby the pharmacological effects of said drugs are simulated in said interactive game program. .

2. The system of claim 1, wherein if and when the user should exercise the re-presented choice to take a further dose of drugs, said timing value is decreased.

3. The system of claim 1, wherein exercising the represented choice to take a further dose of drugs takes time in the program, during which the user cannot participate, and further during which other program events that decrease the user's relative performance are allowed to continue.

4. The system of claim 1, wherein the choice to take a further dose of drugs requires the user either to answer affirmatively or quit the program, and any delay resulting in making this decision detracts from the user's performance in the program.

5. The system of claim 1, wherein the user has a character in the game.

6. The system of claim 1, wherein the game is a multiplayer game.

7. The system of claim 1, wherein input means are provided for the user to specify the size of each dose of drugs.

8. The system of claim 7, wherein means are provided for determining whether a given dose of drugs is an overdose.

9. The system of claim 1, wherein the size of each drug dose is subjected to randomization.

10. The system of claim 1, wherein the option is provided to take a plurality of dosages, with dosage 1 effects that vary with the size of the dosage taken.

11. The system of claim 1, wherein simulated physiological feedbacks, such as the heart rate, are provided.

12. The system of claim 1, wherein an input is provided to specify the personality of the player, which influences the course of gameplay provided.

13. The system of claim 1, wherein gameplay is altered depending on one or more inputs from the following group: type of game or action, personality of the player, and dosage of drug taken.

14. A method for interactively simulating and discouraging drug taking behavior, comprising:
executing an interactive game program;
within said program,
setting (105) a base range of performance parameters for the game, including parameters such as speed, aggressiveness, responsiveness to user inputs, sound volume and tempo;
responding to the user's input, so as to cause the system to simulate ingestion of a dose of drugs and to simulate a drug-induced state by enhancing one or more of said performance parameters above said base range (107,111,113,115);
determining, in accordance with a timing value entered into a timing means, when to terminate said drug-induced state simulation (113,121,127);
simulating, in response to the reading of said timing means, the wearing off of said drug induced state by reducing one or more of said performance parametes to or below said base range (133,135); and
in further response to said timing reading, re-presenting to said user, said simulated choice to take a further dose of drugs (137), and continuing (139,141,143) said program in a manner responsive to said choice, whereby the pharmacological effects of said drugs are simulated in said interactive game program.

15. THe method of claim 14, wherein if and when the user should exercise the represented choice to take a further dose of drugs, said timing value is decreased.

16. The method of claim 14, wherein exercising the represented choice to take a further dose of drugs takes time in the program, during which the user cannot participate, and further during which other program events that decrease the user's relative performance are allowed to continue.

17. The method of claim 14, wherein the choice to take a further dose of drugs requires the user either to answer affirmatively or quit the program, and any delay resulting in making this decision detracts from the user's performance in the program.

18. The method of claim 14, wherein the user has a character in the game.

19. The method of claim 14, wherein the game is a multiplayer game.

20. The method of claim 14, wherein input means are provided for the user to specify the size of each dose of drugs.

21. The method of claim 20 wherein means are provided for determining whether a given dose of drugs is an overdose.

22. The method of claim 14, wherein the size of each drug dose is subjected to randomization.

23. The method of claim 14, wherein the option is provided to take a plurality of dosages, with dosages effects that vary with the size of the dosage taken.

24. The method of claim 14, wherein simulated physiological feedbacks, such as the heart rate, are provided.

25. The method of claim 14, wherein an input is provided to specify the personality of the player, which influences the course of gameplay provided.

26. The method of claim 14, wherein gameplay is altered depending on one or more inputs from the following group: type of game or action, personality of the player, and dosage of drug take.

27. A machine readable medium for storing a computer program, on which there has been recorded a program for carrying out the method of claim 14.

28. A machine readable medium for storing a computer program, on which there has been recorded a program for carrying out the method of claim 15.

29. A machine readable medium for storing a computer program, on which there has been recorded a program for carrying out the method of claim 16.

30. A machine readable medium for storing a computer program, on which there has been recorded a program for carrying out the method of claim 17.

31. A machine readable medium for storing a computer program, on which there has been recorded a program for carrying out the method of claim 18.

32. A machine readable medium for storing a computer program, on which there has been recorded a program for carrying out the method of claim 19.

33. A machine readable medium for storing a computer program, on which there has been recorded a program for carrying out the method of claim 20.

34. A machine readable medium for storing a computer program, on which there has been recorded a program for carrying out the method of claim 21.

35. A machine readable medium for storing a computer program, on which there has been recorded a program for carrying out the method of claim 22.

36. A machine readable medium for storing a computer program, on which there has been recorded a program for carrying out the method of claim 23.

37. A machine readable medium for storing a computer program, on which there has been recorded a program for carrying out the method of claim 24.

38. A machine readable medium for storing a computer program, on which there has been recorded a program for carrying out the method of claim 25.

39. A machine readable medium for storing a computer program, on which there has been recorded a program for carrying out the method of claim 26.

## Patentansprüche

1. Ein System zur interaktiven Simulation und Demotivation des Drogeneinnahmeverhaltens, welches umfasst: Medien zur Ausführung eines interaktiven Spielprogrammes; wobei das besagte Programm ausserdem mit einschliesst:ein en elementaren Parameterbereich zur Spiel- und Leistungsausführung, der solche Parameter wie Geschwindigkeit, Aggressivität, Reaktionsgrad auf Benutzereingaben, Lautstärke und Zeit enthält,Medien, die auf Eingaben des Benutzers reagieren, um zu erreichen, dass das System die Einnahme einer Drogendosis und einen Zustand, der durch die Drogen bewirkt wurde, simuliert, wobei einer oder mehrere der besagten Ausführungsparameter des vorher angegebenen elementaren Parameterbereiches verstärkt werden; Timeout-Medien um in Übereinstimmung mit einem Timeout-Wert festzustellen, wann besagte Simulation des durch die Drogen ausgelösten Zustandes, zu beenden ist; Medien, die auf besagte Timeout-Medien reagieren, um die Beendung des besagten, durch die Drogen induzierten Zustandes mittels Reduzierung eines oder mehrerer Ausführungs-und Leistungsparameter auf oder unter besagten elementaren Parameterbereich, zu simulieren; und Medien, die ebenfalls auf besagte Timeout-Medien reagieren, um die besagte simulierte Wahl der Einnahme einer zusätzlichen Drogendosis dem besagten Benutzer darzustellen und besagtes Programm in einer Form fortzusetzen, die auf die besagte Wahl reagiert, wo die pharmakologischen Wirkungen besagter Drogen in dem besagten interaktiven Spielprogramm simuliert werden.

2. System nach Anspruch 1, in welchem sich, wenn der Benutzer die dargstellte Wahl einer zusätzlichen Drogendosis ausführt, besagter Timeout-Wert verringert.

3. System nach Anspruch 1, wobei die Ausführung der dargestellten Wahl der Einnahme einer zusätzlichen Drogendosis einen Zeitraum innerhalb des Programmes einnimmt, in dem der Benutzer nicht teilnehmen kann und in dem ausserdem erlaubt wird, dass andere Programmvorgänge fortgeführt werden, die die relative Leistung des Benutzers einschränken.

4. System nach Anspruch 1, wobei die Auswahl der Einnahme einer zusätzlichen Dorgendosis bewirkt, dass der Benutzer bejahend zu antworten oder aus dem Programm zu gehen hat und dass jeder beliebige Zeitverzug, der sich bei der Ausführung dieser Entscheidung ergibt, eine Wertverminderung für die Ausführung und die relative Leistung des Benutzers im Programm darstellt.

5. System nach Anspruch 1, wobei der Benutzer im Spiel eine Charaktergestalt einnimmt.

6. System nach Anspruch 1, wobei das Spiel ein Spiel für mehrere Mitspieler ist.

7. System nach Anspruch 1, wobei Eingabemittel eine Rolle spielen, durch die der Benutzer die Menge jeder Drogendosis zu bestimmen hat.

8. System nach Anspruch 7, wobei Mittel vorliegen, durch die bestimmt wird, ob es sich bei einer spezifischen Drogendosis um eine Überdosis handelt.

9. System nach Anspruch 1, wobei die Menge jeder Drogendosis einer aleatorischen Ausführung unterzogen wird.

10. System nach Anspruch 1, wobei die Option verschiedene Dosierungen einzunehmen gegeben wird, deren Dosierungsauswirkungen in Abhängigkeit von der eingenommenen Dosis variieren.

11. System nach Anspruch 1, wobei simulierte physiologische Rückwirkungen, wie die Herzgeschwindigkeit, zur Verfügung gestellt werden.

12. System nach Anspruch 1, wobei eine Eingabe zur Spezifizierung der Persönlichkeit veranlasst wird, die den Verlauf des zur Verfügung gestellten Spieles beeinflusst.

13. System nach Anspruch 1, wobei sich die Ausführung des Spieles in Abhängigkeit von einer oder mehreren Eingaben folgender Parameter verändert: Art des Spieles oder Aktion, Persönlichkeit des Spieles und eingenommene Drogendosis.

14. Verfahren zur interaktiven Simulation und Demotivierung des Verhaltens Drogen einzunehmen, das umfasst:ein interaktives Spiel auszuführen; in dem Programm kommt es zur Realisierung folgender Aktionen: Festlegung (109) eines elementaren Parameterbereiches zur Ausführung und Leistung des Spieles, der solche Parameter wie, Geschwindigkeit, Aggressivität, Reaktionsgrad auf Eingaben des Benutzers, Lautstärke und Zeit umfasst; auf die Eingaben des Benutzers zu reagieren, um zu erreichen, dass das System die Einnahme einer Drogendosis und einen Zustand, der durch die Drogen verursacht wurde, simuliert, wobei einer oder mehrere der besagten Ausführungsparameter des vorher angegebenen elementaren Parameterbereiches verstärkt werden (107, 111, 113, 115); in Übereinstimmung mit einem eingegebenen Timeout-Wert festzustellen, wann besagte Simulation (113, 121, 127) des durch die Drogen ausgelösten Zustandes, zu beenden ist;als Antwort auf das Lesen der besagten Timeout-Mittel, die Beendigung des besagten durch Drogen induzierten Zustandes mittels Reduzierung eines oder mehrerer der genannten Ausführungsparameter auf (133, 135) oder unter besagten elementaren Parameterbereich zu simulieren; und zusätzlich auf besagtes Lesen des Timeout zu reagieren, indem dem besagten Benutzer die besagte simulierte Wahl zur Einnahme einer zusätzlichen Drogendosis (137) dargestellt wird und das besagte Programm in einer Form fortgesetzt wird (139, 141, 143), die auf die besagte Wahl reagiert und wo die pharmakologischen Wirkungen besagter Drogen in dem besagten interaktiven Spielprogramm simuliert werden.

15. Verfahren nach Anspruch 14, in welchem sich, wenn der Benutzer die dargstellte Wahl einer zusätzlichen Drogendosis ausführt, besagter Timeout-Wert verringert.

16. Verfahren nach Anspruch 14, wobei die Ausführung der dargestellten Wahl der zusätzlichen Einnahme einer Drogendosis einen Zeitraum innerhalb des Programmes einnimmt, in dem der Benutzer nicht teilnehmen kann und in dem ausserdem erlaubt wird, dass andere Programmvorgänge fortgeführt werden, die die relative Leistung des Benutzers einschränken.

17. Verfahren nach Anspruch 14, wobei die Wahl der zusätzlichen Einnahme einer Drogendosis bewirkt, dass der Benutzer bejahend zu antworten oder aus dem Programm zu gehen hat und dass jeder beliebige Zeitverzug, der sich bei der Ausführung dieser Entscheidung ergibt, eine Wertverminderung für die Ausführung und die relative Leistung des Benutzers im Programm darstellt.

18. Verfahren nach Anspruch 14, wobei der Benutzer im Spiel eine Charaktergestalt einnimmt.

19. Verfahren nach Anspruch 14, wobei das Spiel ein Spiel für mehrere Mitspieler ist.

20. Verfahren nach Anspruch 14, wobei Eingabemittel eine Rolle spielen, durch die der Benutzer die Menge jeder Drogendosis zu bestimmen hat.

21. Verfahren nach Anspruch 20, wobei Mittel vorliegen, durch die bestimmt wird, ob es sich bei einer spezifischen Drogendosis um eine Überdosis handelt.

22. Verfahren nach Anspruch 14, wobei die Menge jeder Drogendosis einer aleatorischen Ausführung unterzogen wird.

23. Verfahren nach Anspruch 14, wobei die Option verschiedene Dosierungen einzunehmen gegeben wird, deren Dosierungsauswirkungen in Abhängigkeit von der eingenommenen Dosis variieren.

24. Verfahren nach Anspruch 14, wobei simulierte physiologische Rückwirkungen, wie die Herzgeschwindigkeit, zur Verfügung gestellt werden.

25. Verfahren nach Anspruch 14, wobei eine Eingabe zur Spezifizierung der Persönlichkeit bewirkt wird, die den Verlauf des zur Verfügung gestellten Spieles beeinflusst.

26. Verfahren nach Anspruch 14, wobei sich die Ausführung des Spieles in Abhängigkeit von einer oder mehreren Eingaben folgender Parameter verändert: Art des Spieles oder Aktion, Persönlichkeit des Spieles und eingenommene Drogendosis.

27. Maschinenlesbares Medium zur Speicherung eines Computerprogrammes, in dem ein Programm zur Ausführung des Verfahrens nach Anspruch 14 gespeichert wurde.

28. Maschinenlesbares Medium zur Speicherung eines Computerprogrammes, in dem ein Programm zur Ausführung des Verfahrens nach Anspruch 15 gespeichert wurde.

29. Maschinenlesbares Medium zur Speicherung eines Computerprogrammes, in dem ein Programm zur Ausführung des Verfahrens nach Anspruch 16 gespeichert wurde.

30. Maschinenlesbares Medium zur Speicherung eines Computerprogrammes, in dem ein Programm zur Ausführung des Verfahrens nach Anspruch 17 gespeichert wurde.

31. Maschinenlesbares Medium zur Speicherung eines Computerprogrammes, in dem ein Programm zur Ausführung des Verfahrens nach Anspruch 18 gespeichert wurde.

32. Maschinenlesbares Medium zur Speicherung eines Computerprogrammes, in dem ein Programm zur Ausführung des Verfahrens nach Anspruch 19 gespeichert wurde.

33. Maschinenlesbares Medium zur Speicherung eines Computerprogrammes, in dem ein Programm zur Ausführung des Verfahrens nach Anspruch 20 gespeichert wurde.

34. Maschinenlesbares Medium zur Speicherung eines Computerprogrammes, in dem ein Programm zur Ausführung des Verfahrens nach Anspruch 21 gespeichert wurde.

35. Maschinenlesbares Medium zur Speicherung eines Computerprogrammes, in dem ein Programm zur Ausführung des Verfahrens nach Anspruch 22 gespeichert wurde.

36. Maschinenlesbares Medium zur Speicherung eines Computerprogrammes, in dem ein Programm zur Ausführung des Verfahrens nach Anspruch 23 gespeichert wurde.

37. Maschinenlesbares Medium zur Speicherung eines Computerprogrammes, in dem ein Programm zur Ausführung des Verfahrens nach Anspruch 24 gespeichert wurde.

38. Maschinenlesbares Medium zur Speicherung eines Computerprogrammes, in dem ein Programm zur Ausführung des Verfahrens nach Anspruch 25 gespeichert wurde.

39. Maschinenlesbares Medium zur Speicherung eines Computerprogrammes, in dem ein Programm zur Ausführung des Verfahrens nach Anspruch 26 gespeichert wurde.

## Revendications

1. Un système pour simuler de manière interactive et décourager le comportement de prise de drogues, comprenant : des moyens pour exécuter un programme interactif de jeu ; ce programme comprenant en outre : une gamme de paramètres d'exécution et de rendement pour le jeu, qui incluent des paramètres tels que la vitesse, l'agressivité, le degré de réaction à des saisies de l'usager, volume du son et temps ; des moyens qui répondent à des saisies de l'usager, de manière que le système simule une ingestion d'une dose de drogue et un état résultant induit par la drogue, en intensifiant un ou plusieurs parmi ces paramètres d'exécution de la gamme de base indiquée ci-dessus ; des moyens de temporisation pour déterminer, d'après une valeur de temporisation, le moment où doit terminer cette simulation d'état induit par les drogues ; des moyens qui répondent à ces moyens de temporisation pour simuler la terminaison de cet état induit par les drogues par la réduction de l'un ou plusieurs parmi ces paramètres d'exécution et de rendement de cette gamme ou au-dessous de celle-ci ; et des moyens qui répondent aussi à ces moyens de temporisation pour afficher à cet usager le choix simulé et continuer ce programme d'une manière qui réponde à ce choix, où les effets pharmacologiques de ces drogues sont simulés dans ce programme de jeu interactif.

2. Le système de la revendication 1, dans lequel, lorsque l'usager doit réaliser le choix représenté de prendre une dose supplémentaire de drogue, la valeur de temporisation est réduite.

3. Le système de la revendication 1, dans lequel l'exercice du choix représenté de prendre une dose supplémentaire de drogue prend un temps dans le programme, pendant lequel l'usager ne peut pas participer et pendant lequel il est permis que d'autres événements continuent à avoir lieu dans le programme, pour diminuer le rendement relatif de l'usager.

4. Le système de la revendication 1, dans lequel le choix de prendre une dose supplémentaire de drogue requiert que l'usager réponde affirmativement ou quitte le programme, alors que tout retard dans l'exécution de cette décision enlève de la valeur à l'exécution et au rendement relatif de l'usager dans le programme.

5. Le système de la revendication 1, dans lequel l'usager a un caractère dans le jeu.

6. Le système de la revendication 1, dans lequel le jeu est un jeu à plusieurs joueurs.

7. Le système de la revendication 1, dans lequel on dispose de moyens de saisie pour que l'usager spécifie la taille de chaque dose de drogue.

8. Le système de la revendication 7, dans lequel on dispose de moyens pour déterminer si une dose spécifique de drogue est une surdose.

9. Le système de la revendication 1, dans lequel la taille de chaque dose de drogue est soumise à exécution aléatoire.

10. Le système de la revendication 1, dans lequel il est fourni l'option de prendre une diversité de dosages, avec des effets de dosage qui varient avec la taille de la dose prise.

11. Le système de la revendication 1, dans lequel il est fourni des résultats physiologiques simulés de rétro-alimentation, tels que la vitesse du coeur.

12. Le système de la revendication 1, dans lequel il est fourni une saisie pour spécifier la personnalité du joueur, ce qui influe sur le cours de l'exécution du jeu fourni.

13. Le système de la revendication 1, dans lequel l'exécution du jeu est altérée selon une ou plusieurs saisies du groupe suivant : type de jeu ou d'action, personnalité du joueur et dose de drogue prise.

14. Un procédé pour simulation interactive et découragement du comportement de prise de drogues, comprenant : exécuter le programme de jeu interactif ; programme dans lequel sont effectuées les actions suivantes : fixer (109) une gamme de base de paramètres d'exécution et de rendement pour le jeu, qui inclut des paramètres tels que la vitesse, l'agressivité, le degré de réaction aux saisies de l'usager, le volume du son et le temps ;répondre à la saisie de l'usager pour provoquer que le système simule l'ingestion d'une dose de drogues et simule un état induit par les drogues, en intensifiant un ou plusieurs parmi ces paramètres d'exécution et de rendement de la gamme de base indiquée ci-dessus (107, 111, 113, 115) ; déterminer, d'après une valeur de temporisation saisie dans un moyen de temporisation, lorsque termine cette simulation (113, 121, 124) d'état induit par des drogues ; simuler, en réponse à la lecture de ces moyens de temporisation, la terminaison de cet état induit par des drogues, en réduisant un ou plusieurs parmi ces paramètres d'exécution à cette gamme de (133, 135) ou au-dessous de celle-ci ; et répondre additionnellement à cette lecture de temporisateur, en représentant cet usager ce choix simulé pour prendre une dose supplémentaire de drogues (137) et en continuant (139, 141, 143) ce programme d'une manière qui réponde à ce choix, où les effets pharmacologiques de ces drogues sont simulés dans ce programme de jeu interactif.

15. Le procédé de la revendication 14, dans lequel, lorsque l'usager doit réaliser le choix représenté de prendre une dose supplémentaire de drogue, la valeur de temporisation est réduite.

16. Le procédé de la revendication 14, où la réalisation du choix représenté de prendre une dose supplémentaire de drogues prend un temps dans le programme, pendant lequel l'usager ne peut pas participer et pendant lequel il est permis que d'autres événements du programme continuent à avoir lieu, pour diminuer l'exécution et le rendement relatifs de l'usager.

17. Le procédé de la revendication 14, dans lequel le choix de prendre une dose supplémentaire de drogue requiert que l'usager réponde affirmativement ou quitte le programme, alors que tout retard dans l'exécution de cette décision enlève de la valeur à l'exécution et au rendement relatif de l'usager dans le programme.

18. Le procédé de la revendication 14, dans lequel l'usager a un caractère dans le jeu.

19. Le procédé de la revendication 14, dans lequel le jeu est un jeu à plusieurs joueurs.

20. Le procédé de la revendication 14, dans lequel on dispose de moyens de saisie pour que l'usager spécifie la taille de chaque dose de drogue.

21. Le procédé de la revendication 20, dans lequel on dispose de moyens pour déterminer si une dose spécifique de drogue est une surdose.

22. Le procédé de la revendication 14, dans lequel la taille de chaque dose de drogue est soumise à une exécution aléatoire.

23. Le procédé de la revendication 14, dans lequel il est fourni l'option de prendre une diversité de dosages, avec des effets de dosage qui varient avec la taille de la dose prise.

24. Le procédé de la revendication 14, dans lequel il est fourni des résultats physiologiques de rétro-alimentation, tels que la vitesse du coeur.

25. Le procédé de la revendication 14, dans lequel il est fourni une saisie pour spécifier la personnalité du joueur, qui influe sur le cours de l'exécution du jeu fourni.

26. Le procédé de la revendication 14, dans lequel l'exécution du jeu est altérée suivant une ou plusieurs saisies du groupe suivant : type de jeu ou d'action, personnalité du joueur et dosage de la prise de drogues.

27. Un moyen lisible par une machine pour stocker un programme d'ordinateur, dans lequel il a été enregistré un programme pour exécuter le procédé de la revendication 14.

28. Un moyen lisible par une machine pour stocker un programme d'ordinateur, dans lequel il a été enregistré un programme pour exécuter le procédé de la revendication 15.

29. Un moyen lisible par une machine pour stocker un programme d'ordinateur, dans lequel il a été enregistré un programme pour exécuter le procédé de la revendication 16.

30. Un moyen lisible par une machine pour stocker un programme d'ordinateur, dans lequel il a été enregistré un programme pour exécuter le procédé de la revendication 17.

31. Un moyen lisible par une machine pour stocker un programme d'ordinateur, dans lequel il a été enregistré un programme pour exécuter le procédé de la revendication 18.

32. Un moyen lisible par une machine pour stocker un programme d'ordinateur, dans lequel il a été enregistré un programme pour exécuter le procédé de la revendication 19.

33. Un moyen lisible par une machine pour stocker un programme d'ordinateur, dans lequel il a été enregistré un programme pour exécuter le procédé de la revendication 20.

34. Un moyen lisible par une machine pour stocker un programme d'ordinateur, dans lequel il a été enregistré un programme pour exécuter le procédé de la revendication 21.

35. Un moyen lisible par une machine pour stocker un programme d'ordinateur, dans lequel il a été enregistré un programme pour exécuter le procédé de la revendication 22.

36. Un moyen lisible par une machine pour stocker un programme d'ordinateur, dans lequel il a été enregistré un programme pour exécuter le procédé de la revendication 23.

37. Un moyen lisible par une machine pour stocker un programme d'ordinateur, dans lequel il a été enregistré un programme pour exécuter le procédé de la revendication 24.

38. Un moyen lisible par une machine pour stocker un programme d'ordinateur, dans lequel il a été enregistré un programme pour exécuter le procédé de la revendication 25.

39. Un moyen lisible par une machine pour stocker un programme d'ordinateur, dans lequel il a été enregistré un programme pour exécuter le procédé de la revendication 26.
